# EUROPEAN PATENT SPECIFICATION

(11) **EP 2 241 685 B1**
(45) Date of publication and mention of the grant of the patent: **27.09.2017**
(21) Application number: 10159089.1
(22) Date of filing: 06.04.2010
(51) Int. Cl.: E03C 1/04, F16K 11/00

(54) **Sanitary fitting**
Sanitärarmatur
Robinetterie sanitaire

(30) Priority: 08.04.2009 SE 0950233
(43) Date of publication of application: 20.10.2010
(73) Proprietor: Ostnor AB, 792 27 Mora (SE)
(72) Inventor: Andersson, Bengt, 792 94 Mora (SE); Lindblom, Jonas, 792 50 Mora (SE); Björk, Lennart, 792 76 Falun (SE)
(74) Representative: Kransell & Wennborg KB

(56) References cited:
- EP-A1- 0 452 699
- EP-A1- 1 046 846
- DE-U1- 7 916 372

## Description

### Field of the invention

The present invention relates to a sanitary fitting comprising a mixer housing and a casing arranged around the mixer housing.

### Background of the invention

Sanitary fittings for mixing hot and cold water, sometimes referred to as sanitary mixers or simply mixers, usually comprise a mixer housing having an inlet for hot water, an inlet for cold water, a mixing chamber which is connected to both inlets, and one or more outlets connected to the mixing chamber. The mixers may consist of thermostatic mixers, for example, in which a thermostatic insert, adjusted by means of a knob or the like, controls the mixing ratio between cold and hot water, in order to obtain a desired temperature of the mixed water delivered via the outlet. In these mixers the flow of mixed water delivered is usually controlled by a flow valve, which is adjusted by means of a flow knob or the like. Another type of mixer consists of the so-called single-lever mixers. These usually comprise a set of perforated, for example ceramic plates, the position of which relative to one another is controlled in two directions by means of a lever. By using the lever to adjust the extent to which the holes in the plates overlap one another, it is possible to adjust the ratio between the flow of hot and cold water that is being mixed in the mixing chamber, and also the flow of the mixed water leaving the mixing chamber via the outlet. Yet another type of mixer consists of the traditional mixer taps. In these taps the mixing ratio between the hot and cold water supplied to the mixing chamber and the flow of mixed water delivered are adjusted by means of flow valves, which are located on the hot and cold water inlet to the mixing chamber and which are each controlled by a respective knob.

The mixer housing constitutes a substantial part of such mixers. Depending on the type of mixer, the mixer housing, besides the mixing chamber together with inlets and outlets, also comprises, for example, one inlet chamber each for cold water and hot water and flow ducts between the inlets, the various chambers and the outlet or outlets. The mixer housing, particularly in modern mixers, therefore often has a relatively complex internal shape with multiple cavities connecting via internal ducts. The mixer housings usually comprise an integrally cast body. Traditionally, the mixer housings have typically been made of brass. Of late the mixer housings have also been made of aluminium, stainless steel or injection moulded plastics, such as polyamide, for example.

Besides having different characteristics dictated by their function, the external shape or design of the mixers is also an important characteristic. The mixers often represent a significant design fixture in private homes, places of work and public environments. Mixers are therefore often available in a very wide range both of external shapes and external surface finishes, for example chromed, bright or matt-finished external surfaces, or surfaces enamelled in various shades. Besides the visual impact, the feel when handling, using and coming into contact with the mixer is important to the overall impression of the mixer gained by a fitter, final user or observer.

Yet another important characteristic in the design and development of mixers is the scope for easy, cost-effective and efficient manufacturing. It is advantageous, for example, if different mixers having the same functional characteristics can easily be given different external designs as a cost-effective way of satisfying different aesthetic tastes. Similarly it is desirable that mixers having the same or a similar overall aesthetic appearance within a design series can readily be given different functional characteristics in a cost-effective way.

Further important characteristics of the mixers are that they are durable, functionally reliable and easy to maintain and that they will allow easy replacement of single components in the event of damage or malfunction.

### Prior art

A previously known sanitary fitting in the form of a shower mixer comprises a mixer housing of cast brass. The mixer housing comprises an inlet for hot water and inlet for cold water, which inlets can be connected to corresponding hot and cold water pipes. The inlets are connected by way of a thermostatic insert, adjustable by means of a temperature knob, to a mixing chamber. The mixing chamber is connected by way of a flow valve, adjustable by means of a flow knob, to an outlet, which can be connected to a shower hose. In this previously known mixer, the external shape of the cast brass mixer housing also constitutes the external shape of a substantial part of the overall sanitary fitting. This affords the advantage that a user, when using and touching the mixer housing, gets the feel of metal, which affords a solid and substantial impression of the fitting.

However, this known sanitary fitting presents technical manufacturing disadvantages. In order to allow the fitting to have different external designs, the entire cast mixer housing must be endowed with different corresponding shapes. This entails considerable costs, since among other things different moulds have to be designed and produced for the external design of each required variant. The material consumption of brass moreover often increases substantially in order to allow the fitting, for aesthetic design purposes, to be provided with the different external shapes desired. A further disadvantage is that the entire mixer housing has to be surface-treated in order to give the fitting the desired external surface finish.

With the aim of mitigating the aforementioned problems it has been proposed to design sanitary fittings which comprise an inner mixer housing and an outer casing arranged around the mixer housing. The mixer housing can thereby be designed exclusively or at least largely with a view to the technical function which the mixer is intended to fulfil. Proceeding from such a mixer housing it is possible, by manufacturing and arranging different casings around the mixer housing, to produce a wide variety of mixers with the same function but with different external designs. The casings can be given different external shapes and surface finishes relatively easily and cost-effectively. In order to allow a large freedom of choice with regard to the external design of the fitting and a relatively low production cost, the casings are manufactured from plastic material.

One problem with such previously known sanitary fittings comprising an inner mixer housing and a plastic outer casing, however, is that the entire fitting gives a plasticky, hollow or tinny and flimsy feel when touching and handling the sanitary fitting, and a correspondingly negative sound and overall impression when using the fitting. Such a feel and such an impression when touching, handling and using the fitting can easily give rise to a perception that the fitting is of inferior quality, which is obviously a serious disadvantage. Another problem with previously known sanitary fittings is that assembling constituent components of the fitting is made appreciably more difficult should the sanitary fitting be given external designs other than traditional designs in which the fitting has a substantially straight longitudinal extent and a substantially constant cross section over the entire longitudinal extent. EP1046846 A1 discloses a mixer faucet comprising a mixer valve and an external body. A cylindrical intermediate body carrying sealing gaskets is interposed between the mixer valve and the external housing. EP0452699 A1 discloses a sanitary mixer comprising a moulded mixer part and a cover consisting of two half-cylindrical polymeric shells.

### Summary of the invention

An object of the invention therefore is to provide an improved sanitary fitting of the type specified in the introductory part. Another object is to provide such a sanitary fitting which will allow wide scope for variation in the external design of the mixer, with only slight changes, if any, to the mixer housing. A further object is to provide such a sanitary fitting which gives a substantial, solid and robust feel when touching and handling the fitting, and a corresponding overall impression in terms of the sound and quality in handling and use. Yet another object is to provide such a sanitary fitting which will allow easy, efficient and cost-effective manufacture and assembly whilst still affording great scope for variation in the external design and surface finish of the fitting.

These and other objects are achieved by a sanitary fitting of the type specified in the pre-characterizing part of Claim 1 and having the special technical features specified in Claim 1.

The sanitary fitting according to the invention comprises a mixer housing having an axial longitudinal direction and an inlet for hot water, and inlet for cold water, a mixing chamber which is connected to the two inlets, and an outlet connected to the mixing chamber. A casing is arranged outside the mixer housing and at least partially encloses the mixer housing. According to the invention the sanitary fitting comprises a damping element, which is arranged between and in contact with the mixer housing and the casing and which is designed as a radially open sleeve, which can be applied around the mixer housing in a radial direction.

The technical and functional characteristics of the sanitary fitting are determined by the design of the mixer housing and by assembling various parts such as valves, thermostatic inserts, operating devices and the like, these parts being fitted directly or indirectly in the mixer housing. The design of the sanitary fitting visible to the user is defined by the casing arranged around the mixer housing. It is thereby possible to give the sanitary fitting an external shape and surface finish that do not depend on the internal and external design of the mixer housing. The combination of a separate mixer housing with a likewise separate casing also means that these parts can easily be made in different materials. Among other things, this results in a material saving in respect of the often more expensive material that forms the mixer housing, compared to sanitary fittings in which the mixer housing also forms the external visible shape and surface of the fitting.

The damping element, which is arranged between the mixer housing and the casing, is in contact with the outside of the mixer housing and with the inside of the casing. The main function of the damping element is to counteract larger movements and to cushion or absorb vibrations and other minor movements of the casing. The damping element is in contact with the casing and is supported against the mixer housing. This serves to counteract inward flexing of the casing towards the mixer housing under impacts and other contact. The casing thereby gives a more rigid and solid impression and feel when touching and handling the fitting. The damping element furthermore absorbs vibrations that can occur in the casing, for example, when this is subjected to knocks and harder contact and also when water flows through the mixer housing. This also helps to give a substantial and solid feel when touching and handling the fitting. The damping element thereby also lends a more substantial and less tinny character to the sound that emanates when the casing is struck, for example, and when water flows through the mixer housing.

All in all, the damping element arranged between the mixer housing and the casing helps to counteract the feel, the sound and the overall impression that the sanitary fitting is hollow, flimsy and of inferior quality, which can occur when touching, handling and using previously known sanitary fittings provided with casings.

Designing the damping element as a radially open sleeve affords substantial advantages. It greatly facilitates fitting of the damping element, even to mixer housings which have relatively complex external geometries. It is very easy, for example, to fit the damping element in a radial direction around a mixer housing that has a diameter varying over its axial longitudinal extent. The radially open design of the damping element likewise means that this can easily be fitted around mixer housings that are not of a straight design but which have curves or bends over their longitudinal extent. The fact that the damping element can easily be fitted even to mixer housings with complicated external geometries substantially increases the freedom of choice when varying the external shape of the mixer housing. It also affords increased scope for varying the external design of the sanitary fitting, often selected on aesthetic grounds.

The radially open design of the damping element moreover makes it substantially easier to ensure a desired contact with and bearing against the mixer housing, even when the mixer housing has a complicated external geometry.

The damping element is suitably made at least partially from an elastic polymer material. The elasticity of the damping element helps to enhance its vibration-absorbing function. The elasticity also means that both the damping element and the outside of the mixer housing and the inside of the casing can be designed with less precise tolerances, since the elastic damping element has the capacity to conform to the actual shape of the surrounding parts.

The elastic polymer material is furthermore suitably a thermoplastic elastomer material (TPE). These materials have the advantage that they can be used to manufacture parts easily and relatively inexpensively by injection moulding, whilst the finished parts can be endowed with a required elasticity.

The elastic polymer material furthermore suitably has a hardness ranging from approximately 20 to 60, preferably approximately 42 to 46 Shore A. Damping parts having such hardness numbers have proved to have very good damping characteristics for the purpose. At the same time the relatively low hardness means that the damping element is relatively easy to deform elastically, which makes it easier to fit the damping element around the mixer housing and also to fit the casing.

The damping element is suitably arranged between the mixer housing and the casing in a compressed state. This produces an outward pre-tensioning of the casing, which further helps to give the casing and the entire sanitary fitting a more rigid and substantial impression.

The damping element furthermore suitably has a number of flanges projecting towards the casing. This makes it easier for the damping element to conform to the internal shape of the casing and facilitates the generation of a suitable pre-tensioning force on the casing.

The damping part is suitably manufactured by injection moulding. This allows relatively easy and inexpensive mass production of the damping part, at the same time easily allowing it to be provided with any desired shape.

The mixer housing may have a curved cross section along one or more axial sections. Even with such designs of the mixer housing, the design of the damping element allows very easy and rapid fitting of the damping element, whilst the damping element can be designed so that it bears and is supported against a substantial part of the outside of the mixer housing.

The casing suitably comprises two or more joinable casing parts. This allows and makes it easier for the casing to enclose an axially elongate mixer housing fully in the circumferential direction.

The casing then suitably has an extent in an axial direction that substantially coincides with the axial direction of the mixer housing and comprises two casing parts, which can be joined in a radial direction. This allows the casing parts to be designed without any undercuts that are difficult to produce, whilst making it easier to fit the assembled casing around the mixer housing.

The mixer housing is suitably manufactured from metal by casting or hot-pressing or from a polymer material by injection moulding. The mixer housing can thereby be provided relatively easily and cost effectively with the desired internal and external geometries, whilst the casting process is especially well suited to mass production.

The casing is suitably manufactured from a polymer material by injection moulding. This affords great scope for variation in the external and internal design of the casing and hence of the entire sanitary fitting. In particular, the freedom of choice with regard to the external design is important in being ably to satisfy the many different tastes encountered in the market. The polymer material for manufacturing the casing may consist of ABS, for example, this material being particularly suitable where the external surface of the casing is to be chromed. Where the casing is to be pigmented in desired colours, other polymer materials such as polyamide may be used.

Further objects and characteristics of the sanitary fitting according to the invention are set forth in the detailed description of exemplary embodiments below and in the patent claims.

### Brief description of the figures

An exemplary embodiment of the invention is described below with reference to the figures attached, of which:
Fig. 1 is a perspective view of an embodiment of the sanitary fitting according to the invention.
Fig. 2 is an exploded, perspective sketch of the sanitary fitting shown in Fig. 1.
Fig. 3 is a perspective section through the sanitary fitting shown in Fig. 1.
Figs. 4 and 5 are oblique perspective views from the front and from the rear of the sanitary fitting shown in Fig. 1, from which certain parts have been omitted.

### Detailed description of embodiments

In the following description directional and positional terms are used, such as up, down, forward, backward, above, below, in front of, behind, upper, lower, front and rear. These terms relate to directions and positions of a sanitary fitting in the fitted state in a wall, a bath, a washbasin or a kitchen sink, for example.

The exemplary embodiment of the sanitary fitting according to the invention shown in the figures consists of a so-called thermostatic mixer. This thermostatic mixer is intended for use in a shower and has an outlet, which is adapted for connection of a shower hose. Such sanitary fittings are known by such terms as shower fittings or shower mixers.

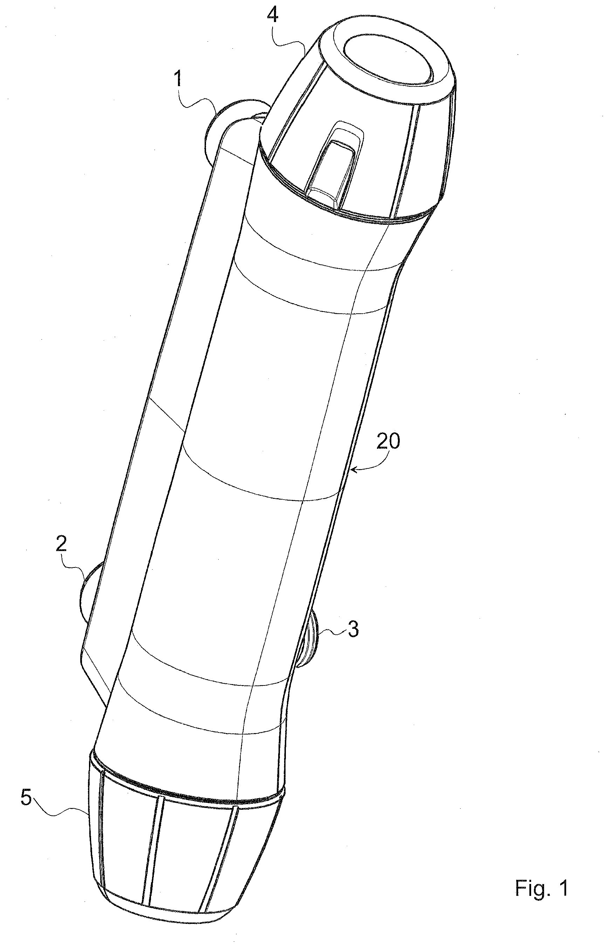

Fig. 1 shows the assembled thermostatic mixer obliquely from in front. The mixer comprises a first connection nipple 1 for connection to a cold water pipe (not shown) and a second connection nipple (2) for connection to a hot water pipe (not shown). The mixer also comprises an outlet nipple 3, to which, for example a shower hose (not shown) with a shower head or a hand shower can be connected. A temperature knob 4 for setting a desired water temperature is located on the right-hand side of the mixer in Fig. 1. A flow control knob 5 for setting a desired outlet flow is located on the opposite left-hand side.

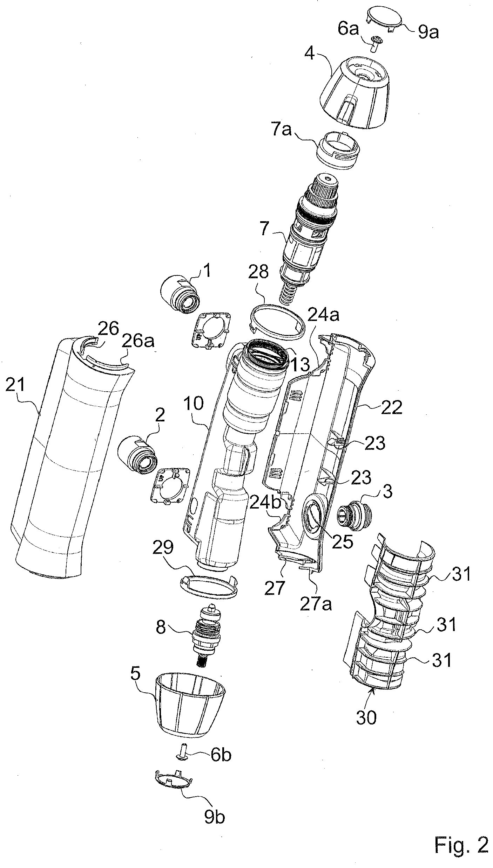

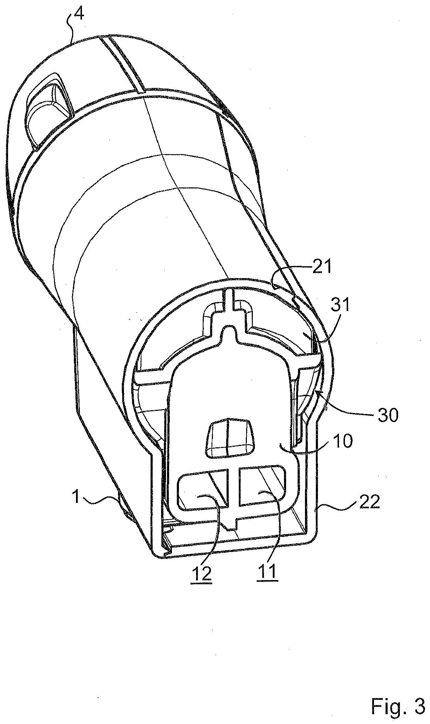

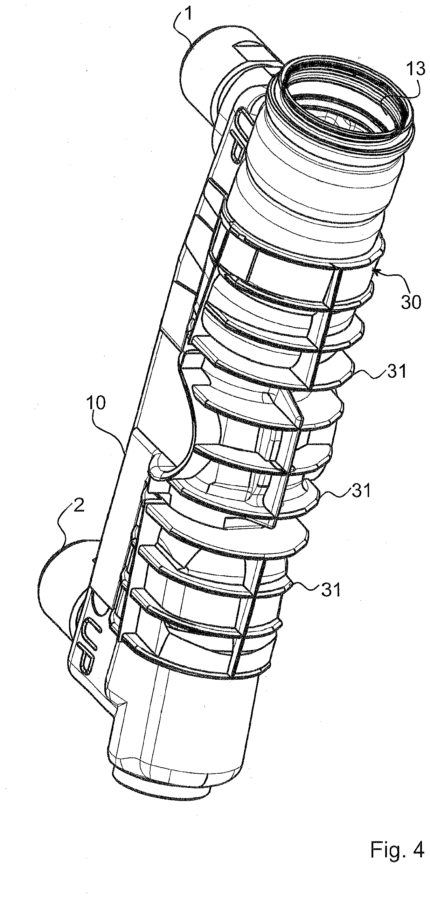

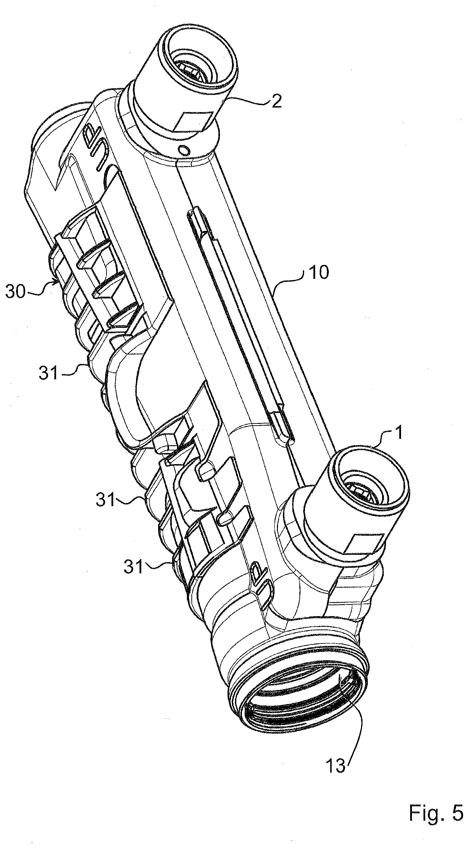

Further constituent parts of the mixer shown in Fig. 1 are illustrated in Figs. 2 to 5. The mixer comprises a mixer housing 10. In the example of a mixer the mixer housing 10 is made of brass by casting in a sand mould. In other embodiments, however, the mixer housing may be formed in another way and from other materials. For example, the mixer housing may be made from aluminium, stainless steel or a polymer material, such as polyamide. The mixer housing 10 has a generally axial longitudinal extent and is generally elongated in the axial direction. As can be seen most clearly from Fig. 2, the mixer housing comprises a number of axial sections with partially curved external cross sectional contours. On the rear side the mixer housing 10 furthermore has a first inlet opening, into which the connection nipple 1 for connection to a cold water pipe is threaded when the mixer is assembled. A second inlet opening, into which the second inlet nipple 2 is threaded for connection to a hot water pipe, is likewise located on the rear side of the mixer. As can be seen from Fig. 3, the mixer also comprises a hot water duct 11 and a mixing chamber 12. A first circular opening 13 for receiving a thermostatic insert 7 is arranged at the right-hand end of the mixer in Fig. 2. The temperature knob 4 is fixed by means of a screw 6a to a rotatable part of the thermostatic insert 7. Fig. 2 also shows a scalding safeguard 7a, which by interaction with the thermostatic insert 7, prevents the water delivered through the outlet nipple having an excessively high temperature. A second circular opening for accommodating a flow control valve 8 is arranged at the opposite end of the mixer. The flow control knob 5 is fixed to the flow control valve 8 by means of a screw 6b. The mixer further comprises a cover plate 9a, 9b, which covers the respective screws 6a, 6b, located on each knob.

A casing 20 comprising an upper casing part 21 and a lower casing part 22 is arranged around the mixer housing 10. The casing 20 has an extent in an axial direction that substantially coincides with the axial direction of the mixer housing 10. The casing 20 is divided into the two casing parts 21, 22 in the axial longitudinal direction of the mixer housing 10 and the casing 20. The two casing parts 21, 22 are joined together in a radial direction around the mixer housing. For this purpose the casing parts 21, 22 have respective interlocking elements 23. (Only the interlocking element 23 of the lower casing part 21 is shown in Fig. 2). When the casing parts 21, 22 are brought towards one another in a radial direction the interlocking elements 23 engage through snap action with one another, thereby fixing the casing parts 21, 22 together. The casing 20 thus assembled around the mixer housing 10 has through-openings 24a, 24b, 25, 26, 27, through which the inlet nipples 1, 2, the outlet nipple 3, the thermostatic insert (not shown) or the flow control valve 8 extend. The through-opening 26 for receiving the thermostatic insert has a substantially circular flange 26a projecting in an axial direction of the casing. The through-opening 27 for receiving the flow control valve 8 correspondingly has a substantially circular flange 27a projecting in the opposite axial direction of the casing 30. A locking ring 28, 29 is arranged around each of the projecting substantially circular flanges 26a, 27a for holding the respective end sections of the casing parts 21, 22 together. The through-opening 25 for receiving the outlet nipple 3 has an inside diameter which with a tight tolerance matches the outside diameter of a corresponding section of the outlet nipple 3. In this way a precise control is achieved of the position of the assembled casing 20 in relation to the mixer housing 10.

In the exemplary embodiment shown in the figures the casing parts 21, 22 are made of injection moulded ABS plastic. The external visible surfaces are chromed. However, the casing may alternatively comprise just one or more than two casing parts. All or certain sections of the casing like the constituent parts of the casing may alternatively be composed of or comprise other materials, such as other polymer materials or metals, for example. Where the casing is to be pigmented, the casing is suitably formed, for example from one or more parts which are made from injection moulded polyamide. Other examples of materials that may be used to manufacture the casing are zinc and aluminium. Beside chroming and pigmenting, the casing may also or alternatively be given other surface treatments, such as lacquering with a coloured and/or transparent lacquer.

The mixer further comprises a damping element 30, which in the fitted position is arranged between and in contact with the mixer housing 10 and the casing 20. In the exemplary embodiment shown the damping element consists of a sleeve, which has an extent in an axial direction that substantially coincides with the axial direction of the mixer housing and the casing. The damping element 30 furthermore has a longitudinal slit made in a radial direction. The geometry of the inner surface of the damping element 30 substantially coincides with the external geometries of the various axial sections of the mixer housing 10, so that the damping element 30, when it is fitted to the mixer housing 10, bears and is supported against the outside of the mixer housing over substantially the entire inner surface of the damping element 30. The damping element 30 furthermore has a number of radially projecting flanges 31, the flanges 31 in the assembled position bearing against the inside of the casing 20. The external dimension of the radial flanges 31 is somewhat larger than the internal dimension of the parts of the casing 20 that bear against the flanges 31. The flanges of the damping element 30 are thereby compressed or otherwise elastically deformed radially inwards when the casing parts 21, 22 are joined together and fixed to one another around the mixer housing and the intervening damping element 30. In this way a pre-tensioning force is generated, which endeavours to press the casing radially outwards.

In the example shown the damping element 30 is made from an injection moulded thermoplastic elastomer material (TPE). The damping element 30 has a hardness number of approximately 44 Shore A, which in tests has been shown to be a particularly suitable hardness. The hardness may be varied and selected, however, in order to achieve a good damping function, suitably within the range from 20 to 60 Shore A. The TPE material used for this example of the damping element furthermore has a modulus of elasticity of approximately 1.1 MPa (@ 100% ASTM D 412). This modulus of elasticity has proved to be particular suitable in the exemplary application of the invention. The modulus of elasticity may be varied, however, depending among other things on the geometries and materials of the constituent parts of the sanitary fitting.

The damping element 30 thus arranged between the mixer housing 10 and the casing 20 serves to prevent the casing being deformed inwards when touching and handling the mixer. The damping element also prevents vibrations being generated and transmitted in the casing. In this way the mixer provided with a damping element gives a more substantial and solid and less brittle, fragile and rickety feel and a corresponding impression for a person handling the mixer, for example when purchasing and fitting the mixer and also in ordinary use of the mixer. Thanks to the damping element, the mixer also gives a different and more solid sound, for example when it is exposed to harder contact and when water flows through the mixer housing, than is the case with corresponding, previously known mixers having no damping element.

Exemplary embodiments of the sanitary fitting according to the invention have been described above. It will be appreciated, however, that the invention is not limited to this description but can be freely modified without departing from the scope of the patent claims below. The invention can therefore be adapted to types of sanitary fittings other than the thermostatic and shower mixers described above. A corresponding damping element can therefore be arranged between an inner mixer housing and an outer casing of a bath mixer, for example, with or without a thermostat, a single-lever mixer intended for fitting to a wall, a washbasin or a kitchen sink, and also to a dual-knob mixer provided with cold and hot water knobs. Instead of being made of TPE material, the damping element may furthermore comprise or be composed of other, preferably elastic, materials, such as natural or synthetic rubber, for example. Instead of being designed with two casing parts that can be joined in a radial direction, the casing may comprise a single casing part fully or partially enclosing the mixer housing in the circumferential direction, which is slipped on to the mixer housing and the damping element in an axial direction. The casing may also comprise two or more parts which can be joined together in an axial direction.

## Claims

1. Sanitary fitting comprising:
- a mixer housing (10) having an axial longitudinal direction and an inlet for hot water, an inlet for cold water, a mixing chamber (12) which is connected to the two
inlets, and an outlet connected to the mixing chamber, and
- a casing (20) which is arranged outside the mixer housing and at least partially encloses the mixer housing, and a damping element (30) arranged between the mixer housing (10) and the casing (20), **characterized in that** the damping element (30) is in contact with the mixer housing (10) and the casing (20), and **in that** it is designed as a radially open sleeve, which can be applied around the mixer housing (12) in a radial direction.

2. Sanitary fitting according to Claim 1, **characterized in that** the damping element (30) is made at least partially from an elastic polymer material.

3. Sanitary fitting according to Claim 2, **characterized in that** the elastic polymer material is a thermoplastic elastomer material (TPE).

4. Sanitary fitting according to either of Claims 2 or 3, **characterized in that** the elastic polymer material has a hardness ranging from approximately 20 to 50, preferably approximately 42 to 46 Shore A.

5. Sanitary fitting according to one of Claims 1 to 4, **characterized in that** the damping element (30) is arranged between the mixer housing (10) and the casing (20) in an elastically deformed state.

6. Sanitary fitting according to one of Claims 1 to 5, **characterized in that** the damping element (30) has a number of flanges (31) projecting towards the casing (20).

7. Sanitary fitting according to one of Claims 1 to 6, **characterized in that** the damping element (30) is manufactured by injection moulding.

8. Sanitary fitting according to one of Claims 1 to 7, **characterized in that** the mixer housing (10) has a cross section with a curved contour along one or more axial sections.

9. Sanitary fitting according to one of Claims 1 to 8, **characterized in that** the casing (20) comprises two or more joinable casing parts (21, 22).

10. Sanitary fitting according to Claim 9, **characterized in that** the casing (20) has an extent in an axial direction that substantially coincides with the axial direction of the mixer housing (10), wherein the two casing parts (21, 22) can be joined in a radial direction.

11. Sanitary fitting according to one of Claims 1 to 10, **characterized in that** the mixer housing is manufactured from metal by casting or hot-pressing or from a polymer material by injection moulding.

12. Sanitary fitting according to one of Claims 1 to 11, **characterized in that** the casing is manufactured from a polymer material by injection moulding.

## Patentansprüche

1. Sanitärarmatur, umfassend:
- ein Mischergehäuse (10), das eine axiale Längsrichtung und einen Einlass für heißes Wasser, einen Einlass für kaltes Wasser, eine Mischkammer (12), die mit den zwei Einlässen verbunden ist, und einen Auslass, der mit der Mischkammer verbunden ist, aufweist, und
- eine Ummantelung (20), die außerhalb des Mischergehäuses angeordnet ist und das Mischergehäuse mindestens teilweise umschließt,
und ein Dämpfungselement (30), das zwischen dem Mischergehäuse (10) und der Ummantelung (20) angeordnet ist, **dadurch gekennzeichnet, dass** das Dämpfungselement (30) mit dem Mischergehäuse (10) und der Ummantelung (20) in Kontakt steht und dass es als eine radial offene Hülse ausgestaltet ist, die in einer radialen Richtung um das Mischergehäuse (12) herum aufgebracht werden kann.

2. Sanitärarmatur nach Anspruch 1, **dadurch gekennzeichnet, dass** das Dämpfungselement (30) mindestens teilweise aus einem elastischen Polymermaterial hergestellt ist.

3. Sanitärarmatur nach Anspruch 2, **dadurch gekennzeichnet, dass** das elastische Polymermaterial ein thermoplastisches Elastomermaterial (TPE) ist.

4. Sanitärarmatur nach einem der Ansprüche 2 oder 3, **dadurch gekennzeichnet, dass** das elastische Polymermaterial eine Härte im Bereich von etwa 20 bis 50, vorzugsweise etwa 42 bis 46, Shore A aufweist.

5. Sanitärarmatur nach einem der Ansprüche 1 bis 4, **dadurch gekennzeichnet, dass** das Dämpfungselement (30) in einem elastisch verformten Zustand zwischen dem Mischergehäuse (10) und der Ummantelung (20) angeordnet ist.

6. Sanitärarmatur nach einem der Ansprüche 1 bis 5, **dadurch gekennzeichnet, dass** das Dämpfungselement (30) mehrere Flansche (31) aufweist, die hin zu der Ummantelung (20) vorstehen.

7. Sanitärarmatur nach einem der Ansprüche 1 bis 6, **dadurch gekennzeichnet, dass** das Dämpfungselement (30) durch Spritzgießen hergestellt ist.

8. Sanitärarmatur nach einem der Ansprüche 1 bis 7, **dadurch gekennzeichnet, dass** das Mischergehäuse (10) entlang eines axialen Abschnitts oder mehrerer axialer Abschnitte einen Querschnitt mit gekrümmter Kontur aufweist.

9. Sanitärarmatur nach einem der Ansprüche 1 bis 8, **dadurch gekennzeichnet, dass** die Ummantelung (20) zwei oder mehr verbindbare Ummantelungsteile (21, 22) umfasst.

10. Sanitärarmatur nach Anspruch 9, **dadurch gekennzeichnet, dass** die Ummantelung (20) in einer axialen Richtung eine Erstreckung aufweist, die im Wesentlichen mit der axialen Richtung des Mischergehäuses (10) übereinstimmt, wobei die zwei Ummantelungsteile (21, 22) in einer radialen Richtung verbunden werden können.

11. Sanitärarmatur nach einem der Ansprüche 1 bis 10, **dadurch gekennzeichnet, dass** das Mischergehäuse aus Metall, durch Gießen oder Heißpressen, oder aus einem Polymer, durch Spritzgießen, hergestellt ist.

12. Sanitärarmatur nach einem der Ansprüche 1 bis 11, **dadurch gekennzeichnet, dass** die Ummantelung aus einem Polymermaterial, durch Spritzgießen, hergestellt ist.

## Revendications

1. Robinetterie sanitaire, comprenant :
- un boîtier de mitigeur (10) doté d'un sens longitudinal axial et d'une entrée pour l'eau chaude, d'une entrée pour l'eau froide, d'une chambre de mélange (12) qui est connectée aux deux entrées et d'une sortie connectée à la chambre de mélange, et
- un compartiment (20) qui est disposé à l'extérieur du boîtier du mitigeur et renferme au moins partiellement le boîtier du mitigeur, et
un élément d'amortissement (30) disposé entre le boîtier de mitigeur (10) et le compartiment (20), **caractérisée en ce que** l'élément d'amortissement (30) est en contact avec le boîtier de mitigeur (10) et le compartiment (20) et **en ce qu'**il est conçu sous forme d'un manchon ouvert radialement qui peut être appliqué autour du boîtier de mitigeur (12) dans un sens radial.

2. Robinetterie sanitaire selon la revendication 1, **caractérisée en ce que** l'élément d'amortissement (30) est composé au moins partiellement d'un matériau polymérique élastique.

3. Robinetterie sanitaire selon la revendication 2, **caractérisée en ce que** le matériau polymérique élastique est un matériau élastomérique thermoplastique.

4. Robinetterie sanitaire selon l'une quelconque des revendications 2 ou 3, **caractérisée en ce que** le matériau polymérique élastique a une dureté allant d'approximativement 20 à 50, des préférences d'approximativement 42 à 46 Shore A.

5. Robinetterie sanitaire selon l'une quelconque des revendications 1 à 4, **caractérisée en ce que** l'élément d'amortissement (30) est disposé entre le boîtier de mitigeur (10) et le compartiment (20) dans un état de déformation élastique.

6. Robinetterie sanitaire selon l'une quelconque des revendications 1 à 5, **caractérisée en ce que** l'élément d'amortissement (30) comporte un certain nombre de brides (31) saillant vers le compartiment (20).

7. Robinetterie sanitaire selon l'une quelconque des revendications 1 à 6, **caractérisée en ce que** l'élément d'amortissement (30) est fabriqué par moulage par injection.

8. Robinetterie sanitaire selon l'une quelconque des revendications 1 à 7, **caractérisée en ce que** le boîtier de mitigeur (10) a une section transversale à contour courbé le long d'une ou plusieurs sections axiales.

9. Robinetterie sanitaire selon l'une quelconque des revendications 1 à 8, **caractérisée en ce que** le compartiment (20) comprend deux pièces de compartiment (21, 22) pouvant être assemblées ou davantage.

10. Robinetterie sanitaire selon la revendication 9, **caractérisée en ce que** le compartiment (20) a une extension dans un sens axial qui coïncide sensiblement avec l'extension axiale du boîtier de mitigeur (10), les deux pièces de compartiment (21, 22) pouvant être assemblées dans un sens radial.

11. Robinetterie sanitaire selon l'une quelconque des revendications 1 à 10, **caractérisée en ce que** le boîtier de mitigeur est fabriqué en métal par moulage ou thermopression ou dans un matériau polymérique par moulage par injection.

12. Robinetterie sanitaire selon l'une quelconque des revendications 1 à 11, **caractérisée en ce que** le compartiment est fabriqué dans un matériau polymérique par moulage par injection.
